# EUROPEAN PATENT APPLICATION

(11) **EP 1 927 457 A1**
(43) Date of publication of application: **04.06.2008**
(21) Application number: 06810672.3
(22) Date of filing: 21.09.2006
(51) Int. Cl.: B29C 45/26, B29C 45/10, B29C 45/16, B29C 45/33, B29L 22/00

(54) **MOLD APPARATUS FOR MOLDING HOLLOW MOLDED ARTICLE AND METHOD OF MOLDING HOLLOW MOLDED ARTICLE**

(30) Priority: 22.09.2005 JP 2005276428; 04.09.2006 JP 2006238455
(71) Applicant: Canon Mold Inc., Kasama-shi Ibaraki 309-1703 (JP)
(72) Inventor: IIMURA, Kazunori, Kasama-shi, Ibaraki 309-1703 (JP); SAKUMA, Yuuji, Kasama-shi, Ibaraki 309-1703 (JP); KINASE, Yoshihiro, Kasama-shi, Ibaraki 309-1703 (JP); NAKATA, Hiroshi, Kasama-shi, Ibaraki 309-1703 (JP)
(74) Representative: TBK-Patent
(86) International application number: PCT/JP2006/319214
(87) International publication number: WO 2007/034979

(57) **Abstract**

Provided are a mold apparatus for molding a hollow molded article and a method of molding the hollow molded article, in which a slide mold can be accurately positioned in at least three positions in which the slide mold is required to be positioned in a molding process for the hollow molded article. The mold apparatus for molding the hollow molded article includes a drive control mechanism for driving the at least one of the first mold and the second mold to be slid, which is a slide mold, and for controlling a position of the slide mold. In the mold apparatus, the drive control mechanism is structured such that the slide mold can be positioned in at least three positions in which the slide mold is required to be positioned when molding the hollow molded article.

## Description

### TECHNICAL FIELD

The present invention relates to a mold apparatus for producing a hollow molded article, and a method of producing the hollow molded article, and more particularly, to a mold apparatus for producing a hollow molded article including a surface on which a film is formed, and a method of producing the hollow molded article.

### BACKGROUND ART

Conventionally, it is well known to mold a hollow molded article by die slide injection.

For example, in the description of Japanese Patent Publication No. H02-038377, there is proposed a method of producing a hollow molded article, in which divided bodies are molded by a pair of male mold and female mold (primary molding), are positioned to oppose each other by sliding one of the molds, and are then welded to each other with a molten resin (secondary molding).

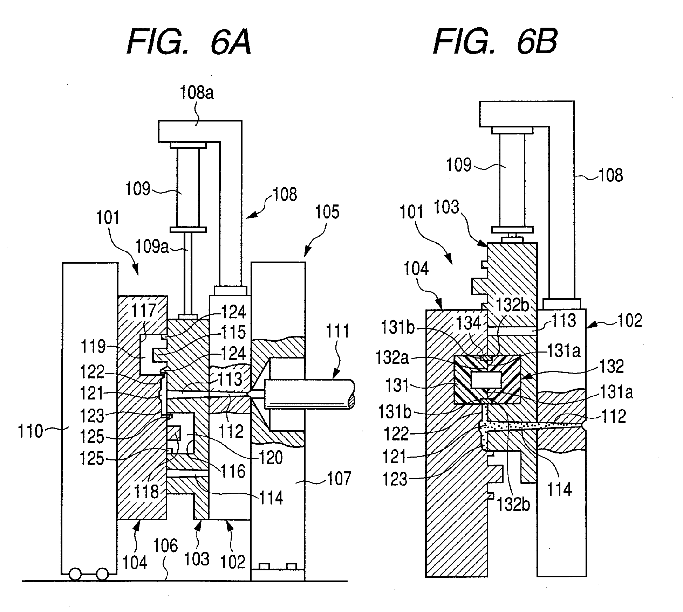

According to the method, as shown in FIG. 6A, there are provided a stationary mold 102 having a single sprue 112, a slide mold 103 moved to two positions along the stationary mold 102, and a movable mold 104 which is registered with the slide mold 103.

The slide mold 103 is provided with a male mold 115 and a female mold 116 for producing the hollow molded article, and is also provided with sub sprues 113 and 114 which are continuous with the sprue 112 of the stationary mold 102 when the slide mold 103 is positioned in the respective two positions.

Further, the movable mold 104 is provided with a female mold 117 and a male mold 118 opposed to the male mold 115 and the female mold 116 of the slide mold 103, respectively.

By the molds each having the above-mentioned structure, a hollow molded article is molded in the following manner.

First, a molten resin is injected into a pair of cavities 119 and 120 formed between the male mold 115 and the female mold 116 and between the male mold 118 and the female mold 117, respectively, thereby forming the divided bodies 131 and 132, respectively.

Next, one mold 103 is allowed to slide from a lower position in which a sliding cylinder 109 extends to a maximum degree as shown in FIG. 6A to an upper position in which the sliding cylinder 109 contracts to a maximum degree as shown in FIG. 6B, thereby registering the slide mold 103 and the movable mold 104 with each other.

As described above, the divided bodies 131 and 132 are opposed to butt on each other. A molten resin is then injected around butt surfaces 131a and 132a to weld the divided bodies 131 and 132 to each other, thereby producing the hollow molded article.

Further, Japanese Patent Application Laid-Open No. 2004-338328 proposes, for molding a light body which is the hollow molded article, a molding method adopting die slide injection including a vapor deposition process.

In this method, the stationary mold is provided with a vacuum vapor deposition system, and between a primary molding process for fabricating a light main body and a lens portion and a secondary molding process for integrating the light main body and the lens portion to each other while butting those, there is performed a vapor deposition process for depositing from the vapor, under vacuum, a reflective surface on an inner surface of the light main body, thereby making the light body having the reflective surface.

In the die slide injection, the slide mold which moves between the processes is required to be positioned in each process for manufacturing the hollow molded article.

In the conventional example disclosed in Japanese Patent Publication No. H02-038377, the slide mold is positioned in two positions, including the lower position in which the sliding cylinder 109 extends to the maximum degree and the upper position in which the cylinder contracts to the maximum degree.

That is, in the process of forming the divided bodies by injecting a molten resin into cavities each formed by the male mold and the female mold opposed to each other, the slide mold is positioned in the lower position in which the sliding cylinder 109 expands to the maximum degree.

Further, in a process of producing the hollow molded article, in which the slide mold and the movable mold are registered with each other and the divided bodies are welded to each other on the butt surfaces of those, the slide mold is positioned in the upper position in which the sliding cylinder 109 contracts to the maximum degree.

However, for example, in a case, as in the description of Japanese Patent Application Laid-Open No. 2004-338328, where positioning in three positions is required because the vapor deposition process is performed between the primary process and the secondary process, a unit as described in the description of Japanese Patent Publication No. H02-038377, in which positioning can be performed only in two positions, cannot be adopted.

Accordingly, also in this case, there is a demand for a mechanism which enables the slide mold to be accurately positioned in a predetermined position.

### DISCLOSURE OF THE INVENTION

In view of the above-mentioned problem, it is an object of the present invention to provide a mold apparatus for producing a hollow molded article and a method of producing the hollow molded article, in which a slide mold can be accurately positioned in at least three positions in which the slide mold is required to be positioned in a molding process.

In order to achieve the above-mentioned object, the present invention provides a mold apparatus for producing a hollow molded article having the following structure, and a method of producing the hollow molded article.

According to the present invention, a mold apparatus for producing a hollow molded article, includes: a first mold having molding portions for molding a divided bodies of a molded article; a second mold having molding portions for molding divided bodies of the molded article; and a drive control mechanism for driving the at least one of the first mold and the second mold to be slid, which is a slide mold.

The drive control mechanism is characterized by that the drive control mechanism positions the slid mold in at least three positions in which the slide mold is required to be positioned when producing the hollow molded article.

Further, according to the present invention, the mold apparatus is characterized in that the drive control mechanism includes: a slider fixed to the slide mold; a ball screw for moving the slider; a servo motor for rotating the ball screw; and a unit for controlling driving of the servo motor.

Further, according to the present invention, the mold apparatus is characterized in that: the first mold serves as a stationary mold; and the second mold serves as a slide mold provided on a movable mold which is driven by a mold opening and closing device in a direction departing from the stationary mold at a time of mold opening.

Further, according to the present invention, the mold apparatus is characterized in that: the first mold serves as a movable mold; and the second mold serves as a slide mold provided on a stationary mold.

Further, according to the present invention, the mold apparatus is characterized by including a guide post provided to at least one of a stationary mold and a movable mold on a surface opposing the at least one of the stationary mold and the movable mold on which the slide mold is provided.

Further, according to the present invention, the mold apparatus is characterized in that the unit for controlling driving of the servo motor includes a power supply control device for controlling power supply to the servo motor by a signal from a mold opening and closing device for driving a movable mold.

Further, according to the present invention, the mold apparatus is characterized in that the unit for controlling driving of the servo motor includes a scale mounted to the slide mold and an encoder mounted to at least one of a stationary mold and a movable mold provided with the slide mold.

The mold apparatus is characterized in that the encoder detects a position of the scale mounted to the slide mold and a signal upon the detection is fed back to the servo motor, thereby positioning the slide mold.

Further, according to the present invention, the mold apparatus is characterized in that the encoder is mounted, through a heat insulating material, to at least one of the stationary mold and the movable mold to which the slide mold is provided.

Further, according to the present invention, a method of producing a hollow molded article, includes: molding, by a first mold having molding portions for molding divided bodies of a molded article and a second mold having molding portions for molding divided bodies of the molded article, the divided bodies of the molded article in the respective molding portions; sliding at least one of the first mold and the second mold to butt into butt parts of the divided bodies on each other; and injecting a resin around the butt parts. The method is characterized by including the following structure.

That is, the method is characterized by including positioning, by a drive control mechanism for driving the at least one of the first mold and the second mold to be slid, which is a slide mold, the slide mold in at least three positions in which the slide mold is required to be positioned when producing the hollow molded article, thereby molding the hollow molded article.

Further, according to the present invention, the method of producing a hollow molded article is characterized by including: setting positioning to be performed in a first positioning position, a second positioning position, and a third positioning position in the stated order as positions in each of which the positioning is required.

That is, the method is characterized by further including: performing primary molding in the first positioning position; performing film formation in the second positioning position; and performing a secondary molding in the third positioning position, thereby producing the hollow molded article.

Further, according to the present invention, the method of producing a hollow molded article is characterized in that: the first mold serves as a stationary mold; and the second mold serves as a slide mold provided on a movable mold which is driven in a direction departing from the stationary mold at a time of mold opening.

Further, according to the present invention, the method of producing a hollow molded article is characterized in that: the first mold serves as a movable mold; and the second mold serves as a slide mold provided on a stationary mold.

Further, according to the present invention, the method of producing a hollow molded article is characterized in that a guide post and a guide hole are formed on a surface opposing the first mold and the second mold, and the method is characterized by including: performing, by the drive control mechanism including a servo motor, positioning of the slide mold in the primary molding, the film formation, and the secondary molding by rotating the servo motor for a predetermined conveying amount; and stopping power supply to the servo motor at a time of mold closing, before the guide post is guided by the guide hole, to correct a position of the slide mold, thereby producing the hollow molded article.

Further, according to the present invention, in the method of producing a hollow molded article, a position of the scale mounted to the slide mold is detected by the encoder mounted to the at least one of the stationary mold and the movable mold to which the slide mold is provided.

The method is characterized in that a signal output from the encoder is fed back to the servo motor.

According to the present invention, it is possible to realize the mold apparatus for molding the hollow molded article and the method of producing the hollow molded article, in which it is possible to accurately position the slide mold in at least three positions in which the slide mold is required to be positioned in the molding process.

Further features of the present invention will become apparent from the following description of exemplary embodiments with reference to the attached drawings.

### BRIEF DESCRIPTION OF THE DRAWINGS

FIGS. 1A and 1B are views for illustrating a primary molding process performed by a mold for producing a hollow molded article according to an embodiment of the present invention.
FIGS. 2A and 2B are views for illustrating a film formation process performed by the mold for producing a hollow molded article according to the embodiment of the present invention.
FIGS. 3A and 3B are views for illustrating a secondary molding process performed by the mold for molding a hollow molded article according to the embodiment of the present invention.
FIG. 4 is a view illustrating an example of an article molded by using the mold according to the present invention.
FIG. 5 is a view for illustrating a guide post.
FIGS. 6A and 6B are views for illustrating a method of molding a hollow molded article by die slide injection according to the description of Japanese Patent Publication No. H02-038377 of a conventional example.

### BEST MODE FOR CARRING OUT THE INVENTION

The best mode for carrying out the present invention will be described in the following embodiment.

### (Embodiment)

Hereinafter, a method of molding a hollow molded article by using a mold for molding the hollow molded article according to the embodiment of the present invention will be described.

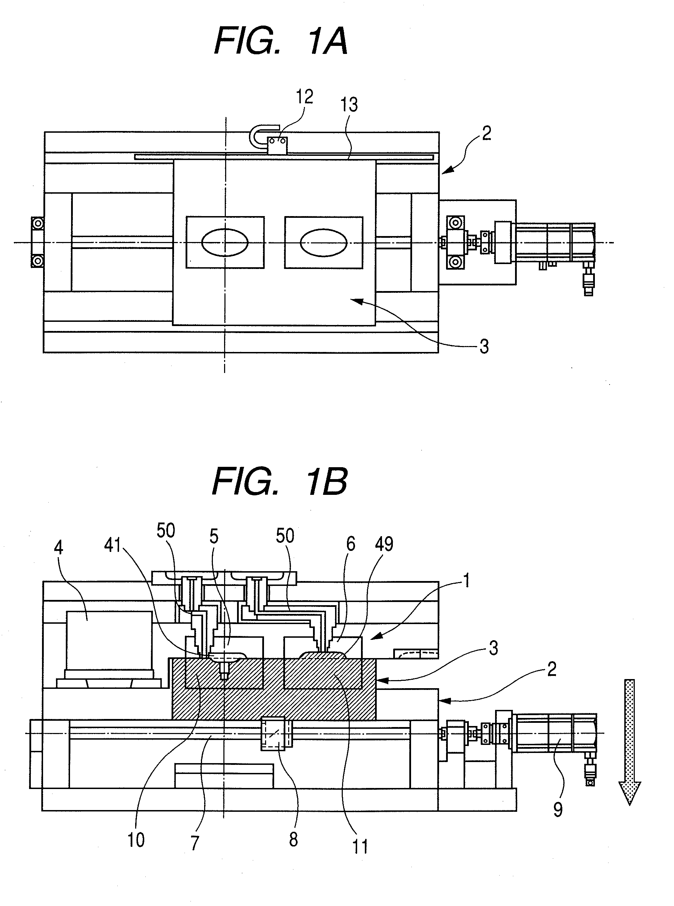

FIGS. 1A and 1B are views for illustrating a primary molding process performed by the mold for molding the hollow molded article according to this embodiment.

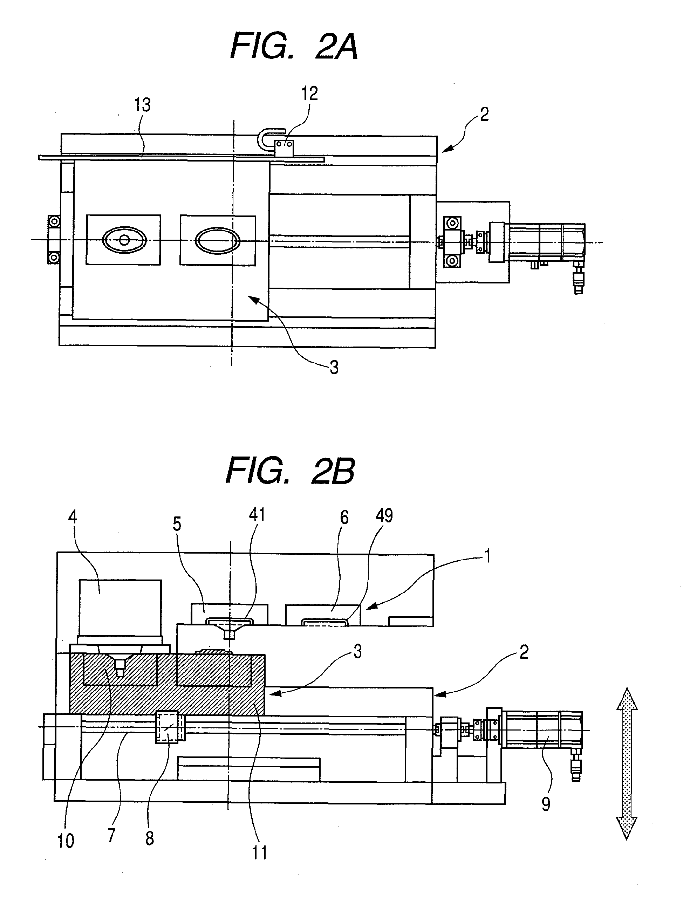

FIGS. 2A and 2B are views for illustrating a film formation process performed by the mold for molding the hollow molded article according to this embodiment.

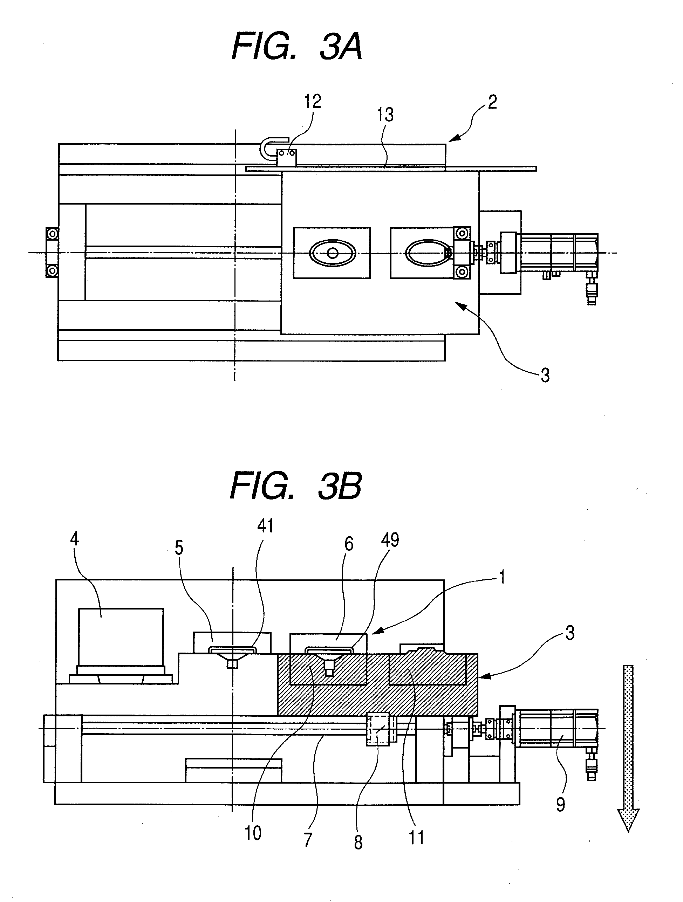

FIGS. 3A and 3B are views for illustrating a secondary molding process performed by the mold for molding the hollow molded article according to this embodiment.

Of those figures, FIGS. 1A, 2A, and 3A are schematic views viewed from left side of the mold with a stationary mold being removed therefrom, and FIGS. 1B, 2B, and 3B are schematic views viewed from above the mold. The mold is operated from the left side (side of a film formation apparatus 4) in those figures.

In FIGS. 1A and 1B, there are provided a first mold 1 which is a stationary mold fixed in position and which does not move at a time of mold opening, a movable mold 2 capable of moving in a direction departing from the stationary mold at the time of mold opening, and a second mold 3 which includes a molding portion for molding divided bodies of the molded article, and which is a slide mold that slides with respect to the stationary mold 1 by a slide mechanism to be described later.

The movable mold 2 opens rightwards (downwards on the plane) together with the slide mold 3 which is the second mold with respect to the stationary mold with an aid of a mold opening/closing mechanism (not shown).

In the stationary mold 1, there are provided the film formation apparatus 4, a stationary mold body molding portion 5, and a stationary mold lens molding portion 6 in a straight line at equal intervals. Further, those are connected to an injection molding machine and there is provided a sprue 50 for supplying a resin to the stationary mold body molding portion 5 and the stationary mold lens molding portion 6.

In this embodiment, the movable mold 2 is provided with the slide mold 3. A drive mechanism for sliding the slide mold 3 is structured.

The slide mold 3 includes a slide mold body molding portion 10 corresponding to the stationary mold body molding portion 5 of the stationary mold 1, and a slide mold lens molding portion 11 corresponding to the stationary mold lens molding portion 6 of the stationary mold 1. The slide mold lens molding portion 11 has a cavity 49 for molding a lens portion while coupling with the stationary mold. Further, the slide mold body molding portion 10 has a cavity 41 for molding a body portion while coupling with the stationary mold.

In this embodiment, the slide mold is provided to the movable mold 2, but the slide mold may be provided to the stationary mold 1. In the latter case, the first mold is the movable mold and the second mold is the slide mold provided onto the stationary mold. Further, each of the stationary mold and the movable mold may be provided with the slide mold.

In the drive mechanism, due to rotation of a servo motor 9, a ball screw 7 rotates. A rotational amount of the ball screw is detected by an encoder (not shown), and a signal thereof is input to a control device (not shown). A slider 8 is screwed on the ball screw 7 and the slider 8 is fixed to the slide mold 3.

Accordingly, due to the rotation of the ball screw 7, the slide mold 3 can be moved. In this embodiment, a conveying amount is measured by the rotation of the ball screw. According to deviation between the conveying amount input to the control device in advance and the rotational amount of the ball screw detected by the encoder, the slide mold is positioned.

However, the ball screw tends to be affected by heat, and a length thereof changes due to the heat. Therefore, a position corresponding to the conveying amount which is set in advance and a position in which the slide mold is actually positioned always vary from each other.

At the time of molding, positioning performed when positions of the molding portion of the stationary mold and the molding portion of the slide mold deviate from each other even slightly, leads up to flash, defective wall thickness, or the like of an injection molded article.

Further, also at a time of vapor deposition, the deviation in positioning leads to deviation in position of vapor deposition, thereby leading up to failure. In order to prevent this, in this embodiment, the conveying amount is corrected. A correcting method is described below.

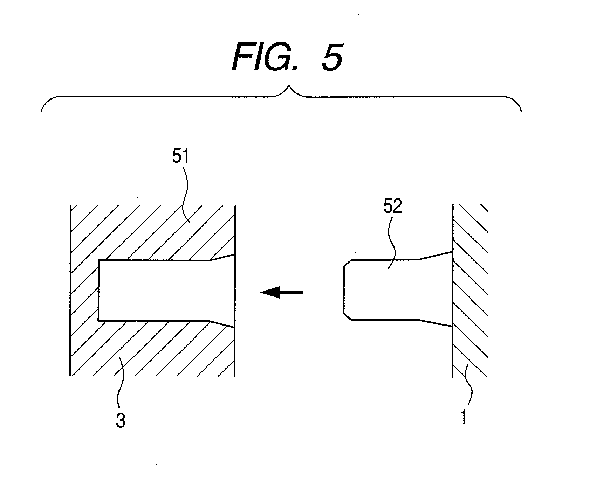

On a parting line of the slide mold and the stationary mold, there are provided a guide post 52 and a guide hole 51 as shown in FIG. 5 for positioning the slide mold. The guide hole 51 has a tapered insertion opening. Therefore, even when the guide post 52 is inserted while being displaced in some degree, the guide post 52 can be smoothly engaged with the guide hole 51. A tapered portion is also provided to the guide post 52 such that the guide post 52 is engaged with the tapered portion of the guide hole 51 when the guide post 52 is completely inserted.

In this embodiment, four guide holes 51 are bored in the slide mold. 10 guide posts 52 are provided on a surface opposing the stationary mold which is to be positioned, in positions opposed to the guide holes 51. The guide posts may be mounted on the slide mold and the guide holes may be provided in the stationary mold.

Before the guide posts 52 are guided by the guide holes 51, a signal is sent from a mold opening/closing device to a power supply control device. In response to the signal, the power supply control device outputs a signal for stopping power supply to the servo motor. In a state where the servo motor is unlocked so that the slide mold can freely move, the guide posts 52 are inserted into the guide holes 51.

In order to suppress, as much as possible, vibration of the slide mold due to an impact caused at a time of mold closing, a timing of sending the signal from the mold opening/closing device to the power supply control device is preferably immediately before tip portions of the guide posts are inserted into the guide holes. Due to the positioning by the guide posts, the stationary mold and the slide mold are accurately positioned. Since the power supply to the servo motor is stopped, the current position is corrected as the position corresponding to the conveying amount which is input to the control device in advance.

At the time of mold opening, the signal is sent from the mold opening/closing device to the power supply control device when the mold opening is completed. In response to the signal, the power supply control device outputs a signal for starting the power supply to the servo motor, thereby starting the power supply to the servo motor.

In this embodiment, it is set that the signal is sent to the power supply control device when the mold opening is completed, but it may be set that the signal is sent when the mold opening is started.

The positioning of the slide mold 3 may be performed by detecting a position of a scale 13 mounted to the slide mold with a linear encoder 12 mounted to the movable mold 2 through a heat insulating plate (not shown).

That is, based on a result detected by the linear encoder 12, a detection signal is output, and positioning of the slide mold 3 is performed by feeding back the signal to the servo motor 9. Further, the heat insulating plate may be provided between the linear encoder 12 and the movable mold 2 as a countermeasure against heat, and with this structure, an effect of heat can be prevented.

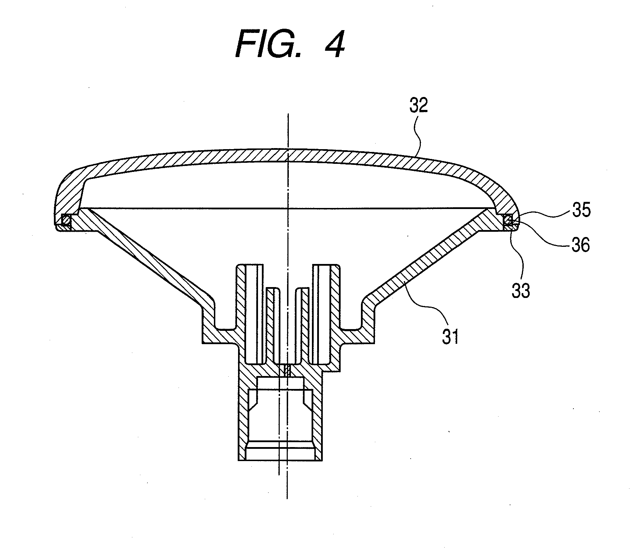

FIG. 4 shows an example of the hollow molded article molded by the mold of the present invention. In FIG. 4, the hollow molded article of this embodiment includes a body portion 31 and a lens portion 32 inner surfaces of which a film is formed. Butt parts 35 and 36 are allowed to butt on each other. On a periphery of a butt portion, there is formed a space 33. A molten resin injected from the injection molding machine is charged into the space through the sprue. By the resin in the space, the body portion and the lens portion are welded to each other, thereby molding the hollow molded article.

Next, the method of molding the hollow molded article is described.

First, the primary molding process is described.

The servo motor 9 is driven, and by using the ball screw 7, the slide mold 3 is positioned in a mold center portion, which is a molding portion in the primary molding process.

The slide mold 3 is positioned in a position for the primary mold process that is a first positioning position according to a deviation between the conveying amount input to the control device in advance as described above and the rotational amount of the ball screw detected by the encoder.

The movable mold 2 is moved to the stationary mold 1 side by the mold opening/closing device, thereby registering the slide mold 3 with the stationary mold 1. At this time, immediately before the guide posts 52 are inserted into the guide holes 51, a signal is sent from the mold opening/closing device to the power supply control device. In response to the signal, the power supply control device outputs a signal for stopping the power supply to the servo motor. In the state where the servo motor is unlocked so that the slide mold can freely move, the guide posts 52 are inserted into the guide holes 51.

As a result, the stationary mold and the slide mold are accurately positioned. Since the power supply to the servo motor is stopped, the current position is corrected as the position corresponding to the conveying amount which is input to the control device in advance.

After the mold registration is performed with high accuracy as described above, mold clamping is performed. FIGS. 1A and 1B show this state, and the cavities 41 and 49 are formed between the stationary mold 1 and the slide mold 3.

In this state, a molten resin is injected from the injection molding machine mounted to the stationary mold 1. The molten resin passes through the sprue 50 of the stationary mold to be charged into the cavities 41 and 49. In this manner, the body portion 31 and the lens portion 32 are respectively formed as divided bodies of the molded article (see FIG. 4).

The movable mold 2 is moved by the mold opening/closing device downwards on the plane, thereby separating the slide mold 3 and the stationary mold 1 to perform the mold opening. As a result, the body portion 31 remains in the slide mold 3 and is released from the stationary mold 1. On the other hand, the lens portion 32 remains in the stationary mold 1 and is released from the slide mold 3.

At the completion of the mold opening, a signal is sent to the power supply control device. In response to the signal, the power supply control device outputs the signal for starting the power supply to the servo motor, thereby starting the power supply to the servo motor.

Next, the film formation process is described.

The servo motor 9 is driven, and by using the ball screw 7, the slide mold 3 is positioned in a frontward portion of the mold (left side on the plane), which is a molding portion in the film formation process. The slide mold 3 is positioned with high accuracy in a position for the film formation process that is a second positioning position according to a deviation between the conveying amount input to the control device in advance and the rotational amount of the ball screw detected by the encoder.

The movable mold 2 is moved to the stationary mold 1 side by the mold opening/closing device, thereby providing the slide mold body molding portion in the film formation apparatus. At this time, immediately before the guide posts 52 are inserted into the guide holes 51, a signal is sent from the mold opening/closing device to the power supply control device.

In response to the signal, the power supply control device outputs a signal for stopping the power supply to the servo motor. In the state where the servo motor is unlocked so that the slide mold can freely move, the guide posts 52 are inserted into the guide holes 51.

As a result, the stationary mold and the slide mold are accurately positioned. Since the power supply to the servo motor is stopped, the current position is corrected as the position corresponding to the conveying amount which is input to the control device in advance. FIGS. 2A and 2B show this state. The body portion 31 remaining in the slide mold 3 is set in the film formation apparatus.

In this embodiment, as the film formation apparatus, a typical film formation apparatus is used, so the description thereof is omitted. The film formation is performed as follows.

In the film formation, a vacuum is produced in the film formation apparatus by using a vacuum pump (not shown), high-energy particles are allowed to collide on a surface of a target to cause atoms of the target to be released, thereby performing film formation on the inner surface of the body portion by a sputtering method in which a film is formed on the inner surface of the body portion 31.

The movable mold 2 is moved by the mold opening/closing device downwards on the plane, thereby separating the slide mold 3 and the film formation apparatus to perform the mold opening. At the completion of the mold opening, a signal is sent to the power supply control device. In response to the signal, the power supply control device outputs the signal for starting the power supply to the servo motor, thereby starting the power supply to the servo motor.

Next, the secondary molding process is described.

The servo motor 9 is driven, and by using the ball screw 7, the slide mold 3 is positioned in a mold back portion (right side on the plane), which is a molding portion in the secondary molding process. The slide mold 3 is positioned with high accuracy in a position for a secondary mold process that is a third positioning position according to a deviation between the conveying amount input to the control device in advance and the rotational amount of the ball screw detected by the encoder. The movable mold 2 is moved to the stationary mold 1 side by the mold opening/closing device, thereby registering the slide mold 3 with the stationary mold 1.

At this time, immediately before the guide posts 52 are inserted into the guide holes 51, the signal is sent from the mold opening/closing device to the power supply control device. In response to the signal, the power supply control device outputs the signal for stopping the power supply to the servo motor. In the state where the servo motor is unlocked so that the slide mold can freely move, the guide posts 52 are inserted into the guide holes 51.

As a result, the stationary mold and the slide mold are accurately positioned. Since the power supply to the servo motor is stopped, the current position is corrected as the position corresponding to the conveying amount which is input to the control device in advance.

After the mold registration is performed with high accuracy as described above, the mold clamping is performed. The state thereof is shown in FIGS. 3A and 3B.

The butt parts 35 and 36 of the body portion 31 which is positioned in the slide mold 3 and in which film formation is performed and the lens portion 32 remaining in the stationary mold 1, respectively, are allowed to butt on each other (see FIG. 4). On the periphery of the butt portion, there is formed the space 33(see FIG. 4). The molten resin injected from the injection molding machine is charged into the space through the sprue.

By the resin in the space, the body portion and the resin portion are welded to each other. After the resin charged into the space is cooled to be solid, the stationary mold 1 and the movable mold 2 are opened again by the mold opening/closing device, thereby allowing the slide mold 3 and the stationary mold 1 to be spaced apart from each other. The body portion 31 and the lens portion 32 are welded while registering with each other to be completed as the single hollow molded article.

The movable mold 2 is moved by the mold opening/closing device downwards on the plane, thereby separating the slide mold 3 and the stationary mold 1 to perform the mold opening. As a result, the hollow molded article is removed.

After the hollow molded article is removed as described above, at the completion of the mold opening, a signal is sent to the power supply control device. In response to the signal, the power supply control device outputs the signal for starting the power supply to the servo motor, thereby starting the power supply to the servo motor.

The servo motor 9 is driven again and the slide mold 3 is positioned in the mold center portion, which is the molding position in the primary molding process. Then, the process moves to the next molding process.

According to this embodiment, by using the servo motor and the ball screw, a speed of the slide mold can be controlled, whereby smooth starting and stopping thereof can be realized with low vibration and low noise.

Further, in the mold matching by using the guide posts, by stopping the power supply to the servo motor, the position corresponding to the conveying amount which is set in advance can be corrected. Therefore, by repeating a series of molding process, the hollow molded article can be continuously molded. Further, automation of the molding process is easy and mass production of the hollow molded products can be realized.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the priority of Japanese Patent Application No. 2005-276428 filed on September 22, 2005 and Japanese Patent Application No. 2006-238455 filed on September 4, 2006, and cites contents of those as part of the subject application.

## Claims

1. A mold apparatus for producing a hollow molded article, comprising:
a first mold having molding portions for molding divided bodies of a molded article;
a second mold having molding portions for molding divided bodies of the molded article; and
a drive control mechanism for driving the at least one of the first mold and the second mold to be slid, which is a slide mold, wherein the drive control mechanism positiones the slide mold in at least three positions in which the slide mold is required to be positioned when producing the hollow molded article.

2. The mold apparatus according to claim 1, wherein the drive control mechanism comprises:
a slider fixed to the slide mold;
a ball screw for moving the slider;
a servo motor for rotating the ball screw; and
a unit for controlling driving of the servo motor.

3. The mold apparatus according to claim 1, wherein:
the first mold comprises a stationary mold; and
the second mold comprises a slide mold provided on a movable mold which is driven by a mold opening and closing device in a direction departing from the stationary mold at a time of mold opening.

4. The mold apparatus according to claim 1, wherein:
the first mold comprises a movable mold; and
the second mold comprises a slide mold provided on a stationary mold.

5. The mold apparatus according to claim 3, further comprising a guide post for positioning the slide mold, provided to the stationary mold on a surface opposing the movable mold on which the slide mold is provided.

6. The mold apparatus according to claim 2, wherein the unit for controlling driving of the servo motor comprises a power supply control device for controlling power supply to the servo motor by a signal from a mold opening and closing device for driving a movable mold.

7. The mold apparatus according to claim 2, wherein:
the unit for controlling driving of the servo motor comprises a scale mounted to the slide mold and an encoder mounted to at least one of a stationary mold and a movable mold provided with the slide mold; and
the encoder detects a position of the scale mounted to the slide mold and a signal upon the detection is fed back to the servo motor, thereby positioning the slide mold.

8. The mold apparatus according to claim 7, wherein the encoder is mounted, through a heat insulating material, to the at least one of the stationary mold and the movable mold to which the slide mold is provided.

9. A method of producing a hollow molded article, comprising:
molding, by a first mold having molding portions for molding divided bodies of a molded article and a second mold having molding portions for molding divided bodies of the molded article, the divided bodies of the molded article in the respective molding portions;
sliding at least one of the first mold and the second mold to butt into butt parts of the divided bodies on each other;
injecting a resin around the butt parts; and
positioning, by a drive control mechanism for driving the at least one of the first mold and the second mold to be slid, which is a slide mold, the slide mold in at least three positions in which the slide mold is required to be positioned when producing the hollow molded article, thereby producing the hollow molded article.

10. The method of producing a hollow molded article according to claim 9, further comprising:
setting positioning to be performed in a first positioning position, a second positioning position, and a third positioning position in the stated order as positions in each of which the positioning is required;
performing primary molding in the first positioning position;
performing film formation in the second positioning position; and
performing a secondary molding in the third positioning position, thereby producing the hollow molded article.

11. The method of producing a hollow molded article according to claim 9, wherein:
the first mold comprises a stationary mold; and
the second mold comprises a slide mold provided on a movable mold which is driven in a direction departing from the stationary mold at a time of mold opening.

12. The method of producing a hollow molded article according to claim 9, wherein:
the first mold comprises a movable mold; and
the second mold comprises a slide mold provided on a stationary mold.

13. The method of producing a hollow molded article according to claim 10, wherein a guide post and a guide hole are formed on a surface opposing the first mold and the second mold, the method comprising:
performing, by the drive control mechanism including a servo motor, positioning of the slide mold in the primary molding, the film formation, and the secondary molding by rotating the servo motor for a predetermined conveying amount; and
stopping power supply to the servo motor at a time of mold closing, before the guide post is guided by the guide hole, to correct a position of the slide mold, thereby producing the hollow molded article.

14. The method of producing a hollow molded article according to claim 13, further comprising:
detecting a position of the scale mounted to the slide mold by the encoder mounted to the at least one of the stationary mold and the movable mold to which the slide mold is provided; and
positioning the slide mold by feeding back a signal from the encoder to the servo motor, thereby producing the hollow molded article.
